# EUROPÄISCHE PATENTSCHRIFT

(11) **EP 1 350 988 B1**
(45) Veröffentlichungstag und Bekanntmachung des Hinweises auf die Patenterteilung: **09.11.2005**
(21) Anmeldenummer: 02006854.0
(22) Anmeldetag: 26.03.2002
(51) Int. Cl.: F16H 25/22

(54) **Kugelgewindetrieb**
Ball screw
Vis d'entraînement à billes

(43) Veröffentlichungstag der Anmeldung: 08.10.2003
(73) Patentinhaber: Danaher Linear GmbH, 72649 Wolfschlugen (DE)
(72) Erfinder: Becker, Wolfgang, 71111 Waldenbuch (DE); Rüger, Ulrich, 73730 Esslingen (DE)
(74) Vertreter: Hoeger, Stellrecht & Partner Patentanwälte

(56) Entgegenhaltungen:
- DE-A- 10 011 383
- US-A- 4 887 480
- US-A- 5 791 192

## Beschreibung

Die Erfindung betrifft einen Kugelgewindetrieb mit einer Gewindespindel und mit einer Gewindemutter, welche jeweils aneinander angepaßte Gewindekanäle aufweisen, in denen Wälzkörper geführt sind, und mit einem oder mehreren Rückführungskanälen zur Rückführung von Wälzkörpern mit einer im wesentlichen axialen Rückführungsrichtung, wobei zur Umlenkung aus einem Gewindekanal in einen Rückführungskanal oder umgekehrt ein Umlenkelement vorgesehen ist, wobei ein Umlenkelement und eine in der Gewindemutter angeordnete Aufnahme für das Umlenkelement so aneinander angepaßt ausgebildet sind, daß das Umlenkelement verschiebungsfest bezüglich jeder Querrichtung zur axialen Richtung in der Aufnahme positionierbar ist.

Kugelgewindetriebe, welche auch als Wälzkörpergewindetriebe bezeichnet werden, mit einer Gewindespindel und mit einer Gewindemutter, welche jeweils aneinander angepaßte Gewindekanäle aufweisen, in denen Wälzkörper geführt sind, und mit einem oder mehreren Rückführungskanälen zur Rückführung von Wälzkörpern mit einer im wesentlichen axialen Rückführungsrichtung, wobei zur Umlenkung aus einem Gewindekanal in einen Rückführungskanal oder umgekehrt ein Umlenkelement vorgesehen ist, sind beispielsweise aus der DE 100 11 383 A1 oder der DE 100 12 810 A1 bekannt.

Aus der US 5,791,192 A, die alle Merkmale des Oberbegriffs des Anspruchs 1 offenbart, ist ein Kugelgewindetrieb mit Umlenkelementen bekannt, wobei die Umlenkelemente eine Führungsnut aufweisen, welche in einem zentralen Bereich des Umlenkelements gebildet ist. Die Führungsnut hat eine kreisförmig geschlossene Röhrenform, wobei zwei Seiten der Führungsnut verbunden sind und jeweils bezüglich eines inneren Pfads des Kugelgewindetriebs ausgerichtet sind.

Davon ausgehend liegt der Erfindung die Aufgabe zugrunde, einen Kugelgewindetrieb zu schaffen, welcher auf einfache Weise herstellbar ist.

Diese Aufgabe wird bei dem eingangs genannten Kugelgewindetrieb erfindungsgemäß dadurch gelöst, daß eine Mittelebene eines Umlenkelements im wesentlichen tangential zu einem Kugelmittenkreis liegt, wobei die Mittelebene parallel zu einer Längswand ist, welche die Aufnahme begrenzt.

Mittels der erfindungsgemäßen Lösung läßt sich ein Umlenkelement und damit der gesamte Kugelgewindetrieb auf einfache und kostengünstige Weise herstellen, da dieses sich ohne weitere Befestigungsmittel an der Gewindemutter fixieren läßt. Über geometrische Ausgestaltung der Aufnahme und des Umlenkelements läßt sich eine Verschiebungsfestigkeit erreichen, die keine weiteren Befestigungsmittel erforderlich macht. Darüber hinaus läßt sich dann auch ein entsprechendes Umlenkelement einstückig ausbilden, so daß auch hier der Fertigungsaufwand und der Aufwand beim Zusammenbauen des Kugelgewindetriebs minimiert ist.

Eine Mittelebene eines Umlenkelements, welche insbesondere parallel zu der Längswand ist, liegt im wesentlichen tangential zu einem Kugelmittenkreis, um so einerseits eine optimierte Ausbildung der Aufnahme zu erreichen und andererseits für einen ungestörten Übergang der Wälzkörperkugeln zu sorgen.

Insbesondere ist es vorgesehen, daß eine Aufnahme und ein zugeordnetes Umlenkelement so aneinander angepaßt ausgebildet sind, daß das Umlenkelement bezüglich jeder axialen Drehachse drehfest in der Aufnahme positionierbar ist. Dadurch ist die Unverschieblichkeit des Umlenkelements in der Aufnahme in jeder Querrichtung zur axialen Richtung gewährleistet.

Insbesondere läßt sich mittels der erfindungsgemäßen Lösung ein einstückiges Umlenkelement ohne zusätzliche Befestigungsmittel an der Gewindemutter fixieren. Ein solches Umlenkelement läßt sich dann auf einfache und kostengünstige Weise beispielsweise mittels spanabhebender Materialbearbeitung oder mittels eines Druckguß- oder Spritzgußverfahrens herstellen. Darüber hinaus kann ein solches Umlenkelement aus einem metallischen Material oder aus einem Kunststoffmaterial hergestellt werden. Weiterhin ist es günstig, wenn für jeden Übergang von einem Gewindekanal in einen Rückführungskanal ein gesondertes Umlenkelement vorgesehen ist. Dadurch läßt sich eine mehrgängige Wälzkörperführung realisieren.

Ganz besonders vorteilhaft ist es, wenn zur Bildung einer Aufnahme für ein zugeordnetes Umlenkelement ein Stirnbereich der Gewindemutter mit einer Ausnehmung versehen ist. Es läßt sich ein Umlenkelement in axialer Richtung in die Gewindemutter einsetzen. Die Gewindemutter weist selber Wände auf. Die Ausnehmung läßt sich innerhalb dieser Wände durchbrechungsfrei ausbilden, da ja eben die Ausnehmung von der Stirnseite her ausbildbar ist. Die "stehengebliebenen" Wände der Gewindemutter können direkt dazu verwendet werden, um die Verschiebungsfestigkeit bzw. Drehfestigkeit für das Umlenkelement in der Aufnahme zu realisieren. Dadurch, daß die Aufnahme in einem Stirnbereich gebildet ist, läßt sich für diese auch ein großer Oberflächenbereich bereitstellen, welcher angepaßt an den entsprechenden Oberflächenbereich des Umlenkelements dazu dienen kann, das Umlenkelement über einen Preßverbund in der Aufnahme zu fixieren, um so auch die axiale Beweglichkeit zu sperren. Es müssen dann keine weiteren Befestigungsmittel für ein Umlenkelement in einer Aufnahme vorgesehen werden.

Insbesondere ist ein Umlenkelement in einer axialen Richtung von einer Stirnseite der Gewindemutter her in eine Aufnahme einsetzbar. Durch entsprechende Ausgestaltung der Aufnahme mit Begrenzungswänden als Sperrwände für die Querverschieblichkeit des Umlenkelements in der Aufnahme läßt sich dann eine drehfeste Fixierung des Umlenkelements in der Aufnahme erreichen.

Insbesondere ist es vorteilhaft, wenn eine Aufnahme für ein zugeordnetes Umlenkelement innerhalb einer Außenseite der Gewindemutter liegt. Ein Teil der Gewindemutterwand, nämlich derjenige Teil zwischen der Aufnahme und der Außenseite, bildet dann automatisch eine Begrenzungswand für das Umlenkelement, welche dessen Verschieblichkeit zu der Außenseite hin bezogen auf diese Begrenzungswand sperrt. Bei entsprechender Anordnung der Aufnahme in der Gewindemutter lassen sich dann Begrenzungswände bereitstellen, welche die Verschieblichkeit des Umlenkelements in jeder Querrichtung sperren und so dessen drehfeste Anordnung in der Aufnahme sichern.

Insbesondere ist eine Aufnahme durch eine Wand begrenzt, welche eine Verschieblichkeit zwischen dem Umlenkelement in der Aufnahme zu einem Außenraum der Gewindemutter sperrt. Diese Wand ist dann selber ein Teil der Gewindemutterwand und es muß kein weiteres gesondertes Befestigungsmittel bezüglich der Sperrung dieser Verschieblichkeit vorgesehen werden.

Ganz besonders vorteilhaft ist es, wenn die Aufnahme und das zugeordnete Umlenkelement so aneinander angepaßt sind, daß das Umlenkelement durch einen Preßverbund in der Aufnahme in axialer Richtung fixierbar ist. Durch eine Preßpassung, beispielsweise gemäß dem Standard P9, kann dann zusätzlich zu der drehfesten Anordnung des Umlenkelements in der Aufnahme auch eine axiale Fixierung erreicht werden. Ohne daß zusätzliche Befestigungsmittel vorgesehen werden müssen, läßt sich somit erfindungsgemäß ein Umlenkelement an der Gewindemutter fixieren. Ein Umlenkelement läßt sich dabei einstückig ausbilden. Es kann aber auch mehrteilig ausgebildet sein.

Günstigerweise ist eine Aufnahme durch gegenüberliegende Wände begrenzt, welche eine Verschieblichkeit des zugeordneten Umlenkelements in der Aufnahme jeweils sperren. Durch gegenüberliegende Wände wird bei entsprechender Dimensionierung des Umlenkelements die Verschieblichkeit in eine Richtung und eine Gegenrichtung gesperrt. Dadurch läßt sich auf fertigungstechnisch einfache Weise eine drehfeste Anordnung realisieren.

Insbesondere sind dabei gegenüberliegende Längswände und gegenüberliegende Querwände vorgesehen, um die Querverschiebung in jeglicher Richtung zu sperren. Darüber hinaus läßt sich dann eine große Kontakt-Oberfläche zwischen Begrenzungswänden der Aufnahme und äußeren Oberflächen des Umlenkelements herstellen, um so wiederum einen guten Preßsitz des Umlenkelements in der Aufnahme herstellen zu können.

Günstigerweise ist eine Längswand in der Gewindemutter so angeordnet, daß sie in einem flachen Winkel zu einer inneren Gewindemutterwand liegt. Dadurch läßt sich diese Längswand mit einer großen Oberfläche in der Gewindemutterwand ausbilden. Darüber hinaus läßt sich dann dieser gegenüberliegend noch eine Längswand anordnen, welche entsprechend kürzer ist, aber die Verschieblichkeit des Umlenkelements in der Aufnahme in der Gegenrichtung sperrt. Bevorzugterweise ist diese Längswand bezogen auf eine Tangente der inneren Gewindemutterwand zu einem Außenraum hin versetzt, so daß sich noch zwischen einem Ende dieser Längswand und der inneren Gewindemutterwand eine Querwand ausbilden läßt, um zum einen die innere Oberfläche der Aufnahme zu erhöhen und um zum anderen eine weitere Sperrfläche bereitzustellen.

Weiterhin ist es günstig, wenn eine Querwand, welche sich an eine Längswand anschließt, abgerundet ausgebildet ist. Dadurch wird eine erhöhte Oberfläche erreicht. Weiterhin läßt sich eine Drehfestigkeit erreichen, auch wenn zwischen dem Umlenkelement und Begrenzungswänden der Aufnahme in einem Teilbereich noch ein gewisses Spiel liegt.

Vorzugsweise ist in dem Umlenkelement ein Umlenkkanal gebildet. Über diesen Umlenkkanal lassen sich dann die Wälzkörper aus dem Rückführungskanal in einen Gewindekanal führen bzw. umgekehrt. Dadurch wird bei in die zugeordnete Aufnahme eingesetztem Umlenkelement auch automatisch für die korrekten Ausrichtungen zwischen Umlenkkanal, Rückführungskanal und Gewindekanälen gesorgt.

Ein Umlenkkanal umfaßt dazu vorzugsweise ein Bogenstück, über das ein Wälzkörper aus einer axialen Richtung in eine Querrichtung bzw. umgekehrt umlenkbar ist.

Es ist weiterhin günstig, wenn eine Aufnahme zu einem Gewindemutterinnenraum hin eine offene Seite aufweist. Eine solche Aufnahme läßt sich auf einfache Weise herstellen und bei entsprechender Ausgestaltung der Aufnahmenbegrenzungswände läßt sich dann das zugeordnete Umlenkelement drehfest und in axialer Richtung verschiebungsfest einsetzen. Die Umlenkfunktion ist dann allein dem Umlenkelement zugewiesen, d. h. die Aufnahme selber hat keine Umlenkfunktion bezüglich Wälzkörpern.

Es kann vorgesehen sein, daß ein Umlenkelement eine im wesentlichen ebene Oberseite umfaßt und/oder eine im wesentlichen ebene Unterseite umfaßt. Die Unterseite ist dabei die einem Aufnahmeboden zugewandte Seite. Die Oberseite ist diejenige Seite, welche der zugeordneten Stirnseite der Gewindemutter hin zuweist. Bei entsprechender ebener Ausgestaltung dieser Unterseite und/oder Oberseite läßt sich das Umlenkelement auf einfache Weise herstellen. Bei einer ebenen Oberseite läßt sich dann auch ein Gewindemutterbereich, in dem die Aufnahme gebildet ist, über ein Umlenkelement bündig abschließen.

Beispielsweise ist ein Umlenkelement so ausgebildet, daß es im wesentlichen bündig mit einem Gewindemutteransatz in einem Innenraum der Gewindemutter sitzt, welcher einer Stirnseite der Gewindemutter zugewandt ist oder bündig mit einer Stirnseite ist. Dadurch ragt das Umlenkelement nicht über einen solchen Ansatz oder die Stirnfläche hinaus und stört beispielsweise nicht die Ankopplung der Gewindemutter an eine Anwendung wie einen Schlitten.

Weiterhin ist es günstig, wenn ein Umlenkelement eine Seite aufweist, welche an eine Innenkontur der Gewindemutter angepaßt ist. Dadurch läßt sich sicherstellen, daß das Umlenkelement nicht in den Innenraum der Gewindemutter ragt und die Bewegung der Gewindespindel stört.

Die nachfolgende Beschreibung einer bevorzugten Ausführungsform dient im Zusammenhang mit der Zeichnung der näheren Erläuterung der Erfindung. Es zeigen:
- Figur 1: eine perspektivische Teilansicht eines Ausführungsbeispiels eines Kugelgewindetriebs, wobei eine Gewindemutter teilweise aufgeschnitten gezeigt ist;

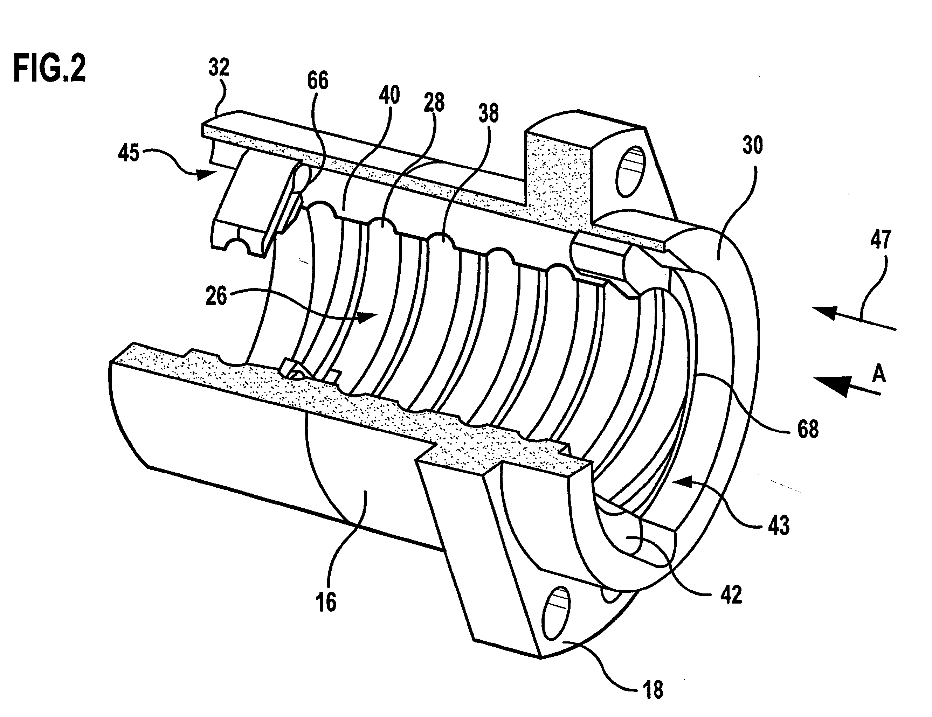

- Figur 2: die Gewindemutter gemäß Figur 1 ohne Gewindespindel;
- Figur 3: eine Draufsicht auf die Gewindemutter gemäß Figur 2 in der Richtung A;
- Figur 4: eine perspektivische Darstellung eines Ausführungsbeispiels eines erfindungsgemäßen Umlenkelements;
- Figur 5: eine Seitenansicht des Umlenkelements gemäß Figur 4 in der Richtung B und
- Figur 6: eine Draufsicht auf das Umlenkelement gemäß Figur 4 in der Richtung C.

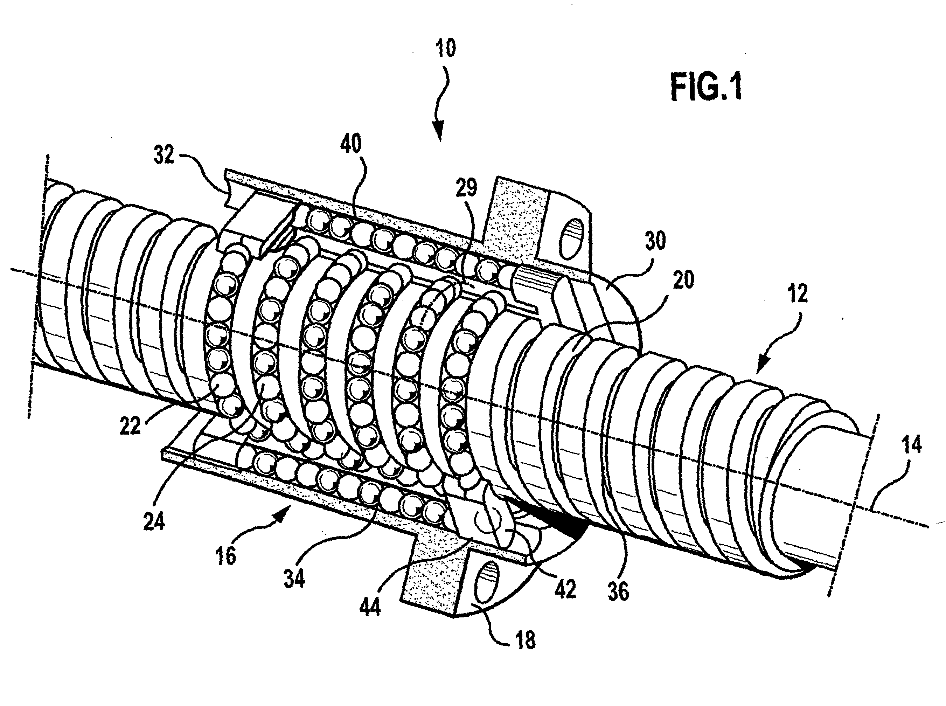

Ein Kugelgewindetrieb oder Wälzkörpergewindetrieb, von dem ein Ausführungsbeispiel in Figur 1 als Ganzes mit 10 bezeichnet ist, umfaßt eine Gewindespindel 12 mit einer Spindelachse 14, welche eine axiale Richtung definiert. Eine Gewindemutter 16 umgibt die Gewindespindel 12, wobei die Gewindespindel 12 in der Gewindemutter 16 drehverschieblich geführt ist; durch Drehung der Gewindespindel 12 um die Achse 14 läßt sich die Gewindemutter 16 relativ zur Gewindespindel 12 längs der Achse 14 verschieben, wobei die Verschiebungsrichtung abhängig ist von der Drehrichtung.

Die Gewindemutter 16 ist mit einem äußerem Flansch 18 versehen, über welchen die Gewindemutter 16 beispielsweise an einem Schlitten montierbar ist. Wird beispielsweise die Gewindespindel 12 translationsfest gehalten und drehend angetrieben, so läßt sich dadurch die Gewindemutter 16 drehfest in Richtung der Achse 14 verschieben. Dadurch läßt sich beispielsweise ein Schlitten, welcher über den Flansch 18 mit der Gewindemutter 16 verbunden ist, längs der axialen Richtung 14 verschieben, wobei die Verschiebungsrichtung durch die Drehrichtung der Gewindespindel 12 bestimmt ist.

Die Gewindespindel 12 ist mit mindestens einem sich schraubenförmig um die Achse 14 wickelnden Gewindekanal 20 versehen, in dem eine endlose Reihe 22 von Wälzkörperkugeln 24 geführt ist.

Die Gewindemutter 16 weist auf ihrer der Gewindespindel 12 zuweisenden Innenseite 26 einen an den Gewindekanal 20 angepaßten schraubenförmigen Gewindekanal 28 auf, in welchen die Wälzkörperkugeln 24 ebenfalls eintauchen. Die Gewindekanäle 20 und 28 bilden dadurch gemeinsam eine Wälzkörperführungsbahn. Ein Kugelmittenkreis 29 der Gewindemutter 16 ist derjenige Führungskreis, auf welchem die Wälzkörperkugeln 24 im Gewindekanal 28 geführt sind, wobei am Kugelmittenkreis 29 der größte Querabstand zur Achse 14 vorliegt.

Zur Rückführung von Wälzkörperkugeln 24 von einem Gewindekanalbereich, welcher in der Nähe eines Endes 30 der Gewindemutter 16 liegt, zu einem Gewindekanalbereich, welcher in der Nähe des anderen Endes 32 liegt, bzw. umgekehrt, und damit zur Schließung der Endlosreihe 22 der Wälzkörperkugeln 24 ist mindestens ein Rückführungskanal 34 vorgesehen. Dieser erstreckt sich in einer Innenwand der Gewindemutter 16 eingebettet im wesentlichen parallel zur axialen Richtung 14.

Der in Figur 1 gezeigte Kugelgewindetrieb 10 ist zweigängig, d. h. die Gewindespindel 12 weist den Gewindekanal 20 und einen dazu versetzten Gewindekanal 36 auf. Entsprechend weist die Gewindemutter 16 einen zu dem Gewindekanal 28 versetzten Gewindekanal 38 auf. Es ist dann neben dem Rückführungskanal 34, welcher für die Rückführung der in den Gewindekanälen 20, 28 geführten Wälzkörperkugeln 24 sorgt, ein zweiter Rückführungskanal 40 vorgesehen, welcher für die Rückführung der in den Gewindekanälen 36, 38 geführten Wälzkörperkugeln 24 sorgt.

Die Rückführungskanäle 34 und 40 sind in der Gewindemutter 16 diametral beabstandet zueinander gebildet.

Der Kugelgewindetrieb kann auch höhergängig als zweigängig oder auch eingängig sein.

Die Führungsrichtung der Wälzkörperkugeln 24 in dem jeweiligen Rückführungskanal 34 bzw. 40 ist im wesentlichen parallel zur axialen Richtung, während sie in den Gewindekanälen 20, 28 und 36, 38 eine Querkomponente zur axialen Richtung 14 aufweist. Zur Überführung der Wälzkörperkugeln 24 aus den Gewindekanälen 20, 28 bzw. 36, 38 in die zugeordneten Rückführungskanäle 34 bzw. 40 und umgekehrt ist deshalb jeweils ein Umlenkelement 42 vorgesehen. Jedem Rückführungskanal 34 bzw. 40 sind zum Schließen der Endlosreihe 22 an Wälzkörperkugeln 24 jeweils zwei Umlenkelemente 42 zugeordnet, wobei ein erstes Umlenkelement im Stirnbereich des einen Endes 30 und das andere Umlenkelement im Stirnbereich des anderen Endes 32 der Gewindemutter 16 positioniert sind.

Für jedes Umlenkelement 42 umfaßt die Gewindemutter 16 eine entsprechende Aufnahme 44, in welcher das zugeordnete Umlenkelement 42 positioniert ist. Eine solche Aufnahme ist durch eine Ausnehmung in der Gewindemutter 16 gebildet, welche von einem stirnseitigen Ende 30 bzw. 32 her zugänglich ist, so daß das Umlenkelement 42 in einer Richtung 47 parallel zur axialen Richtung 14 in die Aufnahme 44 einsetzbar ist. Die Aufnahme 44 ist dabei angepaßt an das Umlenkelement 42 so ausgebildet, daß dessen Beweglichkeit in der Aufnahme 44 in jeder Querrichtung zur axialen Richtung 14 gesperrt ist, d. h. das Umlenkelement 42 drehfest bezogen auf jede potentielle, zur axialen Achse 14 parallelen Drehachse in der Aufnahme 44 sitzt.

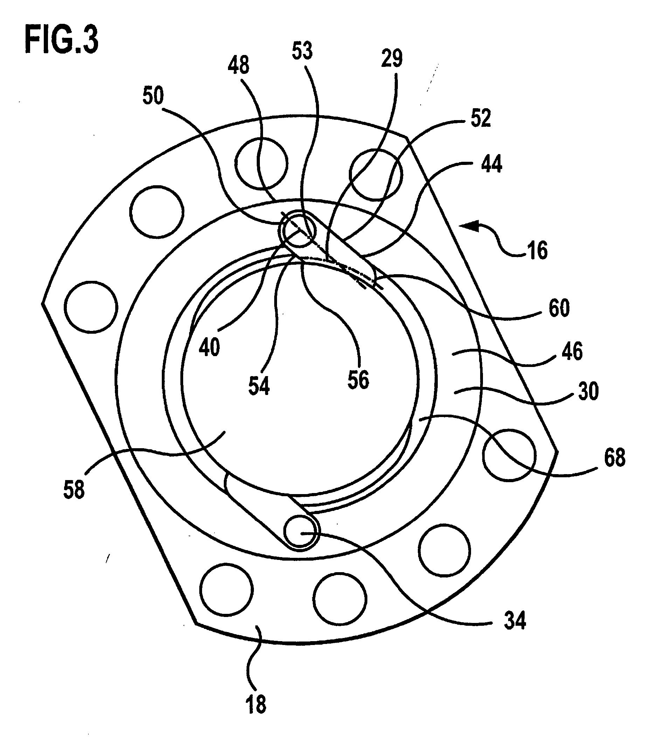

Dazu ist, wie in Figur 3 gezeigt, die Aufnahme 44 in einer Gewindemutterwand 46 der Gewindemutter 16 gebildet und liegt dabei innerhalb einer Außenseite dieser Gewindemutterwand 46. Die Aufnahme 44 ist dadurch durch eine Querwand 50 begrenzt, welche eine Verschieblichkeit des Umlenkelements 42 zu einem Außenraum außerhalb der Gewindemutter 16 sperrt.

Die Querwand 50 ist abgerundet ausgebildet, um die innere Oberfläche der Aufnahme 44 zu erhöhen.

An die Querwand 50 grenzt zur Bildung der Aufnahme 44 eine Längswand 52, welche in einem flachen Winkel zur Gewindewand 46 orientiert ist. Eine zur Längswand 52 parallele Mittelebene 53 des Umlenkelements 42 ist tangential zum Kugelmittenkreis 29 angeordnet, so daß der Übergang der Wälzkörperkugeln 24 aus dem oder in das Umlenkelement 42 im wesentlichen tangential erfolgt. Es läßt sich dadurch auch eine relativ große Länge für diese Längswand 52 erreichen, um so wiederum die Oberfläche der Aufnahme 44 zu erhöhen.

Die Längswand 52 sperrt eine Bewegung des Umlenkelements 42 in Richtung einer Flächennormalen der Längswand 52.

Der Längswand 52 gegenüberliegend ist die Aufnahme 44 durch eine weitere Längswand 54 begrenzt, welche sich an die Querwand 50 anschließt und beispielsweise im wesentlichen parallel zur Längswand 52 ist. Diese weitere Längswand 54 stößt an eine innere Gewindemutterwand 56 der Gewindemutter 16, welche einen Gewindemutterinnenraum 58 begrenzt.

Der Querwand 50 gegenüberliegend und an die Längswand 52 angrenzend ist die Aufnahme 44 durch eine weitere Querwand 60 begrenzt, welche die Verschieblichkeit des Umlenkelements 42 in der Aufnahme 44 auf diese Querwand zu sperrt. Die weitere Querwand 60 grenzt ebenfalls an die innere Gewindemutterwand 56 an. Sie ist wiederum abgerundet ausgebildet, um die innere Oberfläche der Aufnahme 44 zu erhöhen.

Zwischen der weiteren Längswand 54 und der weiteren Querwand 60 ist die Aufnahme 44 zu dem Gewindemutterinnenraum 58 zu offen, um so die Verbindung zwischen dem zugeordneten Rückführungskanal, beispielsweise dem Rückführungskanal 40, und den Gewindekanälen, beispielsweise den Gewindekanälen 36 und 38, herstellen zu können.

Die Aufnahme 44 ist durch die gegenüberliegenden Querwände 50, 60 und gegenüberliegende Längswände 52, 54 begrenzt. Bei entsprechender Ausgestaltung des Umlenkelements 42 sperren diese vier Wände die Verschieblichkeit des Umlenkelements 42 in der Aufnahme 44 in jeder Querrichtung zur axialen Richtung 14. Dadurch wiederum ist das Umlenkelement 42 drehfest in der Aufnahme 44 gehalten.

Ein Umlenkelement 42 läßt sich von dem stirnseitigen Ende 30 bzw. 32 her in der Richtung 47 in die Aufnahme 44 einsetzen und ist dann in dieser drehfest gehalten, ohne daß irgendwelche weiteren Befestigungsmittel vorgesehen werden müssen.

Weiterhin sind die Aufnahme 44 und das zugeordnete Umlenkelement 42 derart aneinander angepaßt ausgebildet, daß das Umlenkelement 42 in der Aufnahme 44 durch einen Preßverbund gehalten ist, so daß das Umlenkelement 42 auch in seiner Beweglichkeit in der axialen Richtung 14 gesperrt ist, wenn es einmal in der Aufnahme 44 sitzt. Die Preßpassung entspricht beispielsweise dem Standard P9. Auch hier müssen dann keine weiteren Befestigungsmittel vorgesehen werden, um ein Umlenkelement 42 an der Gewindemutter 16 zu fixieren.

Das Umlenkelement 42 kann dabei aus einem metallischen Material hergestellt sein, beispielsweise durch spanabhebende Materialbearbeitung oder durch ein Spritzguß- oder Druckgußverfahren. Es kann auch aus einem Kunststoffmaterial hergestellt sein.

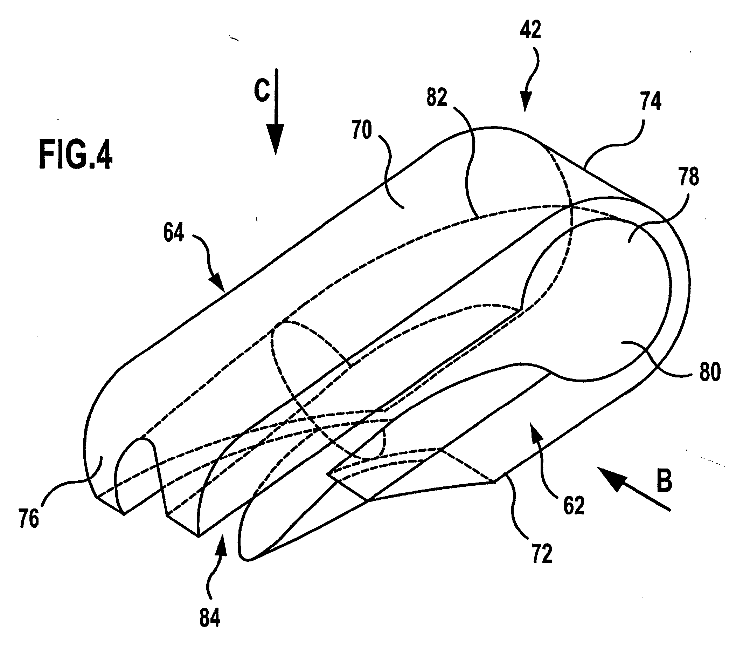

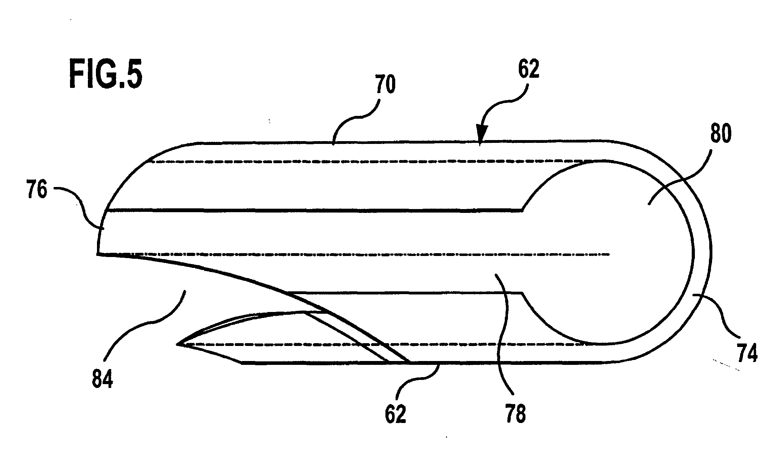

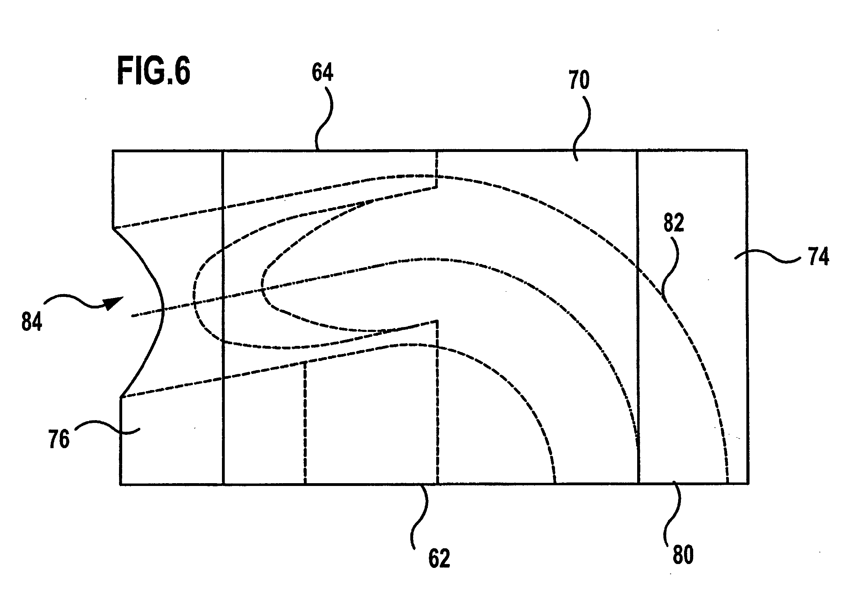

Bei einem Ausführungsbeispiel eines Umlenkelements 42, welches angepaßt an die Aufnahme 44 ausgebildet ist und in den Figuren 4 bis 6 gezeigt ist, erstreckt sich dieses zwischen einer im wesentlichen ebenen Unterseite 62 und einer im wesentlichen ebenen Oberseite 64. Die Unterseite 62 ist dabei, wenn das Umlenkelement 42 in der zugeordneten Aufnahme 44 positioniert ist, einem Aufnahmeboden 66 zugewandt, während die Oberseite 64 der zugeordneten Stirnseite 30 bzw. 32 zugewandt ist. Das Umlenkelement 42 weist eine solche Höhe zwischen der Unterseite 62 und der Oberseite 64 auf, daß, wenn die Gewindemutter 16 in ihrem Gewindemutterinnenraum 58 einen Ringansatz 68 aufweist, diese Oberseite 64 bündig mit dem Ringansatz 68 liegt und insbesondere nicht über diesen hinausragt.

Alternativ kann es vorgesehen sein, daß die Oberseite 64 bündig auf der zugeordneten Stirnseite liegt.

Zwischen der Unterseite 62 und der Oberseite 64 des Umlenkelements 42 erstreckt sich eine auf ihrer Außenseite im wesentlichen ebene Längswand 70, welche an die Längswand 52 der Aufnahme 44 angepaßt ausgebildet ist und dabei im wesentlichen die gleichen Längs- und Höhenabmessungen aufweist. Dieser Längswand 70 gegenüberliegend ist eine weitere Längswand 72 angeordnet, welche an die weitere Längswand 54 der Aufnahme 44 angepaßt ist.

Die beiden Längswände 70 und 72 wiederum sind durch eine abgerundete Querwand 74 verbunden, welche an die Querwand 50 der Aufnahme 44 angepaßt ist.

An der Längswand 70 wiederum sitzt eine Querwand 76, welche an die weitere Querwand 60 der Aufnahme 44 angepaßt ist und dabei insbesondere abgestimmt auf die Querwand 60 abgerundet ist.

Die Unterseite 62 des Umlenkelements 42 durchbrechend ist in diesem eine Ausnehmung 78 als Umlenkkanal für die Wälzkörperkugeln 24 gebildet. Eine Durchbrechung 80 des Umlenkkanals 78 an der Unterseite 62 stellt dabei eine Mündungsöffnung für den Übergang von Wälzkörperkugeln 24 aus dem Rückführungskanal 34 bzw. 40 in den Umlenkkanal 78 bzw. umgekehrt dar. Dementsprechend ist der Durchbruch 80 in seinem Durchmesser an den Durchmesser des zugeordneten Rückführungskanals 34 bzw. 40 angepaßt.

Der Umlenkkanal 78 umfaßt ein sich an den Durchbruch 80 anschließendes Bogenstück 82, welches zur Richtungsumlenkung der Wälzkörperkugeln 24 aus der axialen Richtung 14 in eine Querrichtung dazu bzw. umgekehrt dient. An das Bogenstück 82 anschließend setzt sich der Umlenkkanal 78 zu der Querwand 76 hin fort und ist in dieser Richtung hin offen.

Zwischen der weiteren Querwand 76 und der weiteren Längswand 70 ist das Umlenkelement 42 so ausgestaltet, daß es, wenn es in der Aufnahme 44 sitzt, nicht in den Gewindemutterinnenraum 58 ragt, sondern der Zylinderkontur der inneren Gewindemutterwand 56 folgt.

Eine Mündungsöffnung 84 des Umlenkkanals 78 ist dabei so ausgerichtet, daß die Wälzkörperkugeln 24 in die zugeordneten Gewindekanäle 20, 28 bzw. 36, 38 einkoppelbar sind bzw. aus diesen auskoppelbar sind. Die Mündungsöffnung 84 folgt der Gewindesteigung dieser Gewindekanäle.

Für jeden Übergang zwischen Gewindekanälen und Rückführungskanälen ist ein gesondertes einstückiges Umlenkelement vorgesehen, welches in die in diesem Übergangsbereich gebildete Aufnahme einsetzbar ist. Die Einsetzung erfolgt dabei über die Richtung 47. Für die Fixierung eines Umlenkelements 42 in seiner zugeordneten Aufnahme 44 sind erfindungsgemäß keine weiteren Befestigungsmittel notwendig, da das Umlenkelement 42 drehfest bezüglich jeglicher Drehachse parallel zur axialen Richtung in der Aufnahme 44 gehalten ist und über einen Preßverbund bezogen auf die axiale Richtung 14 in der Aufnahme 44 fixiert gehalten ist.

## Patentansprüche

1. Kugelgewindetrieb mit einer Gewindespindel (12) und mit einer Gewindemutter (16), welche jeweils aneinander angepaßte Gewindekanäle (20, 28; 36, 38) aufweisen, in denen Wälzkörper (24) geführt sind, und mit einem oder mehreren Rückführungskanälen (34; 40) zur Rückführung von Wälzkörpern (24) mit einer im wesentlichen axialen Rückführungsrichtung, wobei zur Umlenkung aus einem Gewindekanal (20, 28; 36, 38) in einen Rückführungskanal (34; 40) oder umgekehrt ein Umlenkelement (42) vorgesehen ist, wobei ein Umlenkelement (42) und eine in der Gewindemutter (16) angeordnete Aufnahme (44) für das Umlenkelement (42) so aneinander angepaßt ausgebildet sind, daß das Umlenkelement (42) verschiebungsfest bezüglich jeder Querrichtung zur axialen Richtung (14) in der Aufnahme (44) positionierbar ist, **dadurch gekennzeichnet , daß**eineMittelebene(53) eines Umlenkelements (42) im wesentlichen tangential zu einem Kugelmittenkreis (29) liegt, wobei die Mittelebene (53) parallel zu einer Längswand (52) ist, welche die Aufnahme (44) begrenzt.

2. Kugelgewindetrieb nach Anspruch 1, **dadurch gekennzeichnet, daß** eine Aufnahme (44) und ein zugeordnetes Umlenkelement (42) so aneinander angepaßt ausgebildet sind, daß das Umlenkelement (42) bezüglich jeder axialen Drehachse drehfest in der Aufnahme (44) positionierbar ist.

3. Kugelgewindetrieb nach Anspruch 1 oder 2, **dadurch gekennzeichnet, daß** ein Umlenkelement (42) einstückig ausgebildet ist.

4. Kugelgewindetrieb nach einem der vorangehenden Ansprüche, **dadurch gekennzeichnet, daß** für jeden Übergang von einem Gewindekanal (20, 28; 36, 38) in einen Rückführungskanal (34; 40) ein gesondertes Umlenkelement (42) vorgesehen ist.

5. Kugelgewindetrieb nach einem der vorangehenden Ansprüche, **dadurch gekennzeichnet, daß** zur Bildung einer Aufnahme (44) für ein zugeordnetes Umlenkelement (42) ein Stirnbereich (43; 45) der Gewindemutter (16) mit einer Ausnehmung versehen ist.

6. Kugelgewindetrieb nach Anspruch 5, **dadurch gekennzeichnet, daß** ein Umlenkelement (42) in einer axialen Richtung (47) von einer Stirnseite (30; 32) der Gewindemutter (16) her in eine Aufnahme (44) einsetzbar ist.

7. Kugelgewindetrieb nach einem der vorangehenden Ansprüche, **dadurch gekennzeichnet, daß** eine Aufnahme (44) für ein zugeordnetes Umlenkelement (42) innerhalb einer Außenseite der Gewindemutter (16) liegt.

8. Kugelgewindetrieb nach Anspruch 7, **dadurch gekennzeichnet, daß** eine Aufnahme (44) durch eine Wand (50; 52; 54; 60) begrenzt ist, welche eine Verschieblichkeit des Umlenkelements (42) in der Aufnahme (44) zu einem Außenraum der Gewindemutter (16) hin sperrt.

9. Kugelgewindetrieb nach einem der vorangehenden Ansprüche, **dadurch gekennzeichnet, daß** die Aufnahme (44) und das zugeordnete Umlenkelement (42) so aneinander angepaßt sind, daß das Umlenkelement (42) durch einen Preßverbund in der Aufnahme (44) in axialer Richtung (14) fixierbar ist.

10. Kugelgewindetrieb nach einem der vorangehenden Ansprüche, **dadurch gekennzeichnet, daß** eine Aufnahme (44) durch gegenüberliegende Wände (50, 60; 52, 54) begrenzt ist, welche eine Verschieblichkeit des zugeordneten Umlenkelements (42) in der Aufnahme (44) jeweils sperren.

11. Kugelgewindetrieb nach Anspruch 10, **dadurch gekennzeichnet, daß** gegenüberliegende Längswände (52, 54) und gegenüberliegende Querwände (50, 60) vorgesehen sind.

12. Kugelgewindetrieb nach einem der vorangehenden Ansprüche, **dadurch gekennzeichnet, daß** die Längswand (52) in der Gewindemutter (16) so angeordnet ist, daß sie in einem flachen Winkel zu einer inneren Gewindemutterwand (56) liegt.

13. Kugelgewindetrieb nach Anspruch 11 oder 12, **dadurch gekennzeichnet, daß** eine Querwand (50; 60), welche sich an eine Längswand (52) anschließt, abgerundet ausgebildet ist.

14. Kugelgewindetrieb nach einem der vorangehenden Ansprüche, **dadurch gekennzeichnet, daß** in einem Umlenkelement (42) ein Umlenkkanal (78) gebildet ist.

15. Kugelgewindetrieb nach Anspruch 14, **dadurch gekennzeichnet, daß** ein Umlenkkanal (78) ein Bogenstück (82) umfaßt, über das Wälzkörper (24) aus einer axialen Richtung (14) in eine Querrichtung bzw. umgekehrt umlenkbar sind.

## Claims

1. A ball screw drive with a threaded spindle (12) and with a threaded nut (16), which respectively have thread grooves (20, 28; 36, 38) adapted to one another, in which roll bodies (24) are guided, and with one or more return grooves (34; 40) for the return of the roll bodies (24) in an essentially axial return direction, wherein for deflection from a thread groove (20, 28; 36, 38) into a return groove (34; 40) or vice versa, a deflection element (42) is provided, wherein a deflection element (42) and a seating (44) arranged in the threaded nut (16) for the deflection element (42) are configured to be adapted to one another such that the deflection element (42) can be positioned in the seating (44) to be fixed against displacement relative to every transverse direction to the axial direction (14), **characterised in that** a central plane (53) of a deflection element (42) lies essentially tangentially to a ball reference circle (29), wherein the central plane (53) is parallel to a longitudinal wall (52), which defines the seating (44).

2. A ball screw drive according to Claim 1, **characterised in that** a seating (44) and an associated deflection element (42) are configured to be adapted to one another such that the deflection element (42) can be positioned in the seating (44) to be fixed against rotation relative to every axial rotational axis.

3. A ball screw drive according to Claim 1 or 2, **characterised in that** a deflection element (42) is configured in one piece.

4. A ball screw drive according to one of the preceding claims, **characterised in that** a separate deflection element (42) is provided for each transfer from a thread groove (20, 28; 36, 38) into a return groove (34; 40).

5. A ball screw drive according to one of the preceding claims, **characterised in that** to form a seating (44) for an associated deflection element (42) an end region (43; 45) of the threaded nut (16) is provided with a recess.

6. A ball screw drive according to Claim 5, **characterised in that** a deflection element (42) can be inserted into the seating (44) in an axial direction (47) from a side (30; 32) of the threaded nut (16).

7. A ball screw drive according to one of the preceding claims, **characterised in that** a seating (44) for an associated deflection element (42) lies within an outer side of the threaded nut (16).

8. A ball screw drive according to Claim 7, **characterised in that** a seating (44) is defined by a wall (50; 52; 54; 60), which blocks any ability of the deflection element (42) to shift in the seating (44) towards an outer area of the threaded nut (16).

9. A ball screw drive according to one of the preceding claims, **characterised in that** the seating (44) and the associated deflection element (42) are adapted to one another such that the deflection element (42) can be secured in the seating (44) in axial direction (14) by a press bond.

10. A ball screw drive according to one of the preceding claims, **characterised in that** a seating (44) is defined by opposing walls (50, 60; 52, 54), which respectively block any ability of the associated deflection element (42) to shift in the seating (44).

11. A ball screw drive according to Claim 10, **characterised in that** opposing longitudinal walls (52, 54) and opposing transverse walls (50, 60) are provided.

12. A ball screw drive according to one of the preceding claims, **characterised in that** the longitudinal wall (52) is arranged in the threaded nut (16) so that it lies at a flat angle to an inner threaded nut wall (56).

13. A ball screw drive according to Claim 11 or 12, **characterised in that** a transverse wall (50; 60), which adjoins a longitudinal wall (52), is rounded.

14. A ball screw drive according to one of the preceding claims, **characterised in that** a deflection channel (78) is formed in a deflection element (42).

15. A ball screw drive according to Claim 14, **characterised in that** a deflection channel (78) comprises a curve section (82), via which roll bodies (24) can be deflected from an axial direction (14) into a transverse direction or vice versa.

## Revendications

1. Vis d'entraînement à billes avec une broche filetée (12) et avec un écrou fileté (16), présentant des canaux de filetage (20,28 ; 36,38) chaque fois adaptés les uns aux autres, dans lesquels des corps de roulement (24) sont guidés, et avec un ou plusieurs canaux de retour (34 ; 40) pour le retour de corps de roulement (24) avec une direction de retour sensiblement axiale, sachant que, pour dévier d'un canal de filetage (20,28 ; 36,38) en un canal de retour (34 ; 40) ou inversement, est prévu un élément de renvoi (42), sachant qu'un élément de renvoi (42) et un logement (44), disposé dans l'écrou fileté (16), pour l'élément de renvoi (42) sont mutuellement adaptés de manière que l'élément de renvoi (42) puisse être positionné dans le logement (44), de façon immobilisée en coulissement par rapport à toute direction transversale par rapport à une direction axiale (14), **caractérisée en ce qu'**un plan médian (53) d'un élément de renvoi (42) est situé sensiblement tangentiellement à un cercle de centre de sphères (29), le plan médian (53) étant parallèle à une paroi longitudinale (52) délimitant le logement (44).

2. Vis d'entraînement à billes selon la revendication 1, **caractérisée en ce qu'**un logement (44) et un élément de renvoi (42) associé sont adaptés l'un à l'autre, de manière que l'élément de renvoi (42) puisse être positionné de façon assujettie en rotation dans le logement (44), par rapport à tout axe de rotation axial.

3. Vis d'entraînement à billes selon la revendication 1 ou 2, **caractérisée en ce qu'**un élément de renvoi (42) est réalisé d'une seule pièce.

4. Vis d'entraînement à billes selon l'une des revendications précédentes, **caractérisée en ce que**, pour chaque transition d'un canal de filetage (20,28 ; 36,38), en un canal de retour (34 ; 40) est prévu un élément de renvoi (42) séparé.

5. Vis d'entraînement à billes selon l'une des revendications précédentes, **caractérisée en ce que** pour former un logement (44), pour un élément de renvoi (42) associé, est prévu une zone frontale (43 ; 45) de l'écrou fileté (16) avec un évidement.

6. Vis d'entraînement à billes selon la revendication 5, **caractérisée en ce qu'**un élément de renvoi (42) est susceptible d'être inséré en une direction axiale (47), depuis une face frontale (30 ; 32) de l'écrou fileté (16) dans un logement (44).

7. Vis d'entraînement à billes selon l'une des revendications précédentes, **caractérisée en ce qu'**un logement (44) pour un élément de renvoi (42) associé est situé à l'intérieur d'une face extérieure de l'écrou fileté (16).

8. Vis d'entraînement à billes selon la revendication 7, **caractérisée en ce qu'**un logement (44) est délimité par une paroi (50 ; 52 ; 54 ; 60) bloquant une mobilité de l'élément de renvoi (42) dans le logement (44) vers un espace extérieur de l'écrou fileté (16).

9. Vis d'entraînement à billes selon l'une des revendications précédentes, **caractérisée en ce que** le logement (44) et l'élément de renvoi (42) associés sont mutuellement adaptés de manière que l'élément de renvoi (42) puisse être fixé en direction axiale (14), par un assemblage pressé dans le logement (44).

10. Vis d'entraînement à billes selon l'une des revendications précédentes, **caractérisée en ce qu'**un logement (44) est délimité par des parois (50,60 ; 52,54) opposées, bloquant chacune une mobilité de l'élément de renvoi (42) associé dans le logement (44).

11. Vis d'entraînement à billes selon la revendication 10, **caractérisée en ce que** des parois longitudinales (52,54) opposées et des parois transversales (50,60) opposées sont prévues.

12. Vis d'entraînement à billes selon l'une des revendications précédentes, **caractérisée en ce que** la paroi longitudinale (52) est disposée dans l'écrou fileté (16), de manière qu'elle se trouve sous un angle plat par rapport à une paroi d'écrou fileté (56) intérieure.

13. Vis d'entraînement à billes selon la revendication 11 ou 12, **caractérisée en ce qu'**une paroi transversale (50 ; 60), se raccordant à une paroi longitudinale (52), est conformée de façon arrondie.

14. Vis d'entraînement à billes selon l'une des revendications précédentes, **caractérisée en ce qu'**un canal de renvoi (78) est formé dans un élément de renvoi (42).

15. Vis d'entraînement à billes selon la revendication 14, **caractérisée en ce qu'**un canal de renvoi (78) comprend une pièce arquée (82), par l'intermédiaire de laquelle des corps de roulement (24) sont susceptibles d'être déviés, d'une direction axiale (14) en une direction transversale, ou inversement.
